# FASCICULE DE BREVET EUROPEEN

(11) **EP 1 426 342 B1**
(45) Date de publication et mention de la délivrance du brevet: **19.04.2006**
(21) Numéro de dépôt: 03292914.3
(22) Date de dépôt: 24.11.2003
(51) Int. Cl.: C03B 37/018

(54) **Procédé de réalisation de préforme à fibre optique**
Verfahren zum Herstellen einer Vorform für optische Fasern
Process of making an optical fibre preform

(30) Priorité: 05.12.2002 FR 0215332
(43) Date de publication de la demande: 09.06.2004
(73) Titulaire: Draka Comteq B.V., 1018 TX Amsterdam (NL)
(72) Inventeur: Jolly, Jacques, 78400 Chatou (FR); Decaux, Isabelle, 78711 Mantes La Ville (FR); Glemot, Marie-Pierre, 78570 Andresy (FR); Offre, Nathalie, 78800 Houilles (FR); Campion, Jean-Florent, 78700 Conflans St Honorine (FR)
(74) Mandataire: Blokland, Arie

(56) Documents cités:
- DE-A- 3 820 217
- FR-A- 2 576 693
- FR-A- 2 742 743
- US-A- 4 385 802
- US-A- 5 364 429
- US-A1- 2002 159 735

## Description

L'invention concerne le domaine des procédés de réalisation de préforme à fibre optique par dépôt de couches, lesdits procédés étant du type dépôt chimique en phase vapeur (CVD «Chemical Vapor Deposition» en langue anglo-saxonne). Parmi les procédés de type CVD, il existe notamment les procédés de type dépôt chimique modifié en phase vapeur (MCVD «Modified Chemical Vapor Deposition» en langue anglo-saxonne) utilisant un chalumeau et les procédés de type dépôt chimique en phase vapeur utilisant un four comme moyens de chauffage (FCVD «Furnace Chemical Vapor Deposition» en langue anglo-saxonne) gas utilisent un four inductif ou résistif.

Un des problèmes de tous ces procédés est d'augmenter leur productivité. Dans les procédés de type CVD, le profil d'indice de la préforme à fibre optique est réalisé par le dépôt successif de couches de verre concentriques à l'intérieur d'un tube de verre. Plus les couches déposées sont épaisses, plus le temps de cycle est court et plus la productivité sera importante.

Selon un premier art antérieur, il est connu des procédés de type MCVD utilisant un taux de phosphore élevé afin d'abaisser la viscosité du verre pour faciliter l'étape de vitrification ce qui permet de déposer des couches épaisses et ainsi d'avoir une productivité importante. Lors de la réalisation de préformes à fibre optique à profil d'indice complexe de type fibre à dispersion décalée (DSF «Dispersion Shifted Fiber» en langue anglo-saxonne) incluant notamment les préformes à fibre optique de type fibre à dispersion décalée non nulle (NZ-DSF «Non Zero Dispersion Shifted Fiber» en langue anglo-saxonne) et de type fibre à compensation de dispersion (DCF «Dispersion Compensating Fiber» en langue anglo-saxonne), dont le coeur comprend au moins trois tranches, à savoir une partie centrale, une gaine intérieure et un anneau, auquel coeur s'ajoute une gaine extérieure, le taux de phosphore en poids dans les couches de la préforme correspondant à la gaine intérieure et à l'anneau est compris entre 0,2% et 0,4%. La partie centrale du coeur, d'indice relativement élevé, ne contient pas de phophore et est faite avec des couches plus fines. Voir par exemple de brevet US 2002/0159735 A1.

Selon un deuxième art antérieur, il est connu un procédé de type FCVD, par exemple dans la demande de brevet FR 2742743, permettant une bonne productivité par dépôt de couches épaisses, le four chauffant mieux que le chalumeau, mais ne comportant pas de précision quant à une éventuelle utilisation de phosphore pour améliorer la vitrification et ne s'intéressant pas au problème particulier des préformes à fibre optique à profil d'indice complexe.

Or, pour les préformes à fibre optique à profil d'indice complexe, le phosphore présente l'inconvénient d'entraîner la réalisation de profils d'indice imprécis, ce qui donne des paramètres optogéométriques mal contrôlés et d'autant plus mal contrôlés que le profil d'indice est complexe, ceci ayant surtout un effet sur la pente de dispersion chromatique, ce qui est très gênant pour des fibres optiques de type DSF ou DCF. Un profil d'indice imprécis présente notamment des « vagues » entre chaque couche de dépôt. Le premier art antérieur présente l'inconvénient d'utiliser un taux de phosphore trop important résultant dans des préformes à fibre optique à profil d'indice imprécis. Le deuxième art antérieur ne s'intéresse pas au problème particulier des préformes à fibre optique à profil d'indice complexe et ne précise pas de taux de phosphore.

Afin d'augmenter la productivité tout en réalisant des profils d'indice nets, l'invention propose, dans le cadre de la réalisation de préformes à fibre optique à profil d'indice complexe de type DSF ou DCF comprenant au moins une gaine intérieure et un anneau, l'association de l'utilisation d'un four comme moyen de chauffage, c'est-à-dire d'un procédé de type FCVD, et d'un taux de phosphore en poids comme élément fondant facilitant la vitrification inférieur ou égal à 0,1% au moins dans les couches de la préforme correspondant à la gaine intérieure et à l'anneau de la fibre optique. C'est l'utilisation d'un procédé de type FCVD, le four étant beaucoup plus efficace que le chalumeau pour chauffer la préforme, qui permet la diminution du taux de phosphore tout en conservant une vitrification correcte afin de conserver une productivité correcte. Avec un chalumeau, le maintien d'un taux élevé de phosphore aurait été nécessaire pour conserver une vitrification correcte lors du dépôt de couches épaisses ; en l'absence de phosphore, avec un chalumeau, on ne peut déposer que des couches minces, ce qui pénalise la productivité.

Selon l'invention, il est prévu un procédé de réalisation de préforme à fibre optique par dépôt de couches, le procédé étant de type CVD, la fibre optique ayant d'une part un coeur comprenant au moins une partie centrale, une gaine intérieure et un anneau et d'autre part une gaine extérieure, la fibre optique étant de type DSF ou DCF, caractérisé en ce que le procédé est de type FCVD, et en ce que les couches de la préforme correspondant à la gaine intérieure et à l'aqneau de la fibre optique comprenant de phosphore at présentent un taux de phosphore en poids inférieur ou égal à 0,1%.

Dans un mode de réalisation préférentiel, on choisit un taux de phosphore faible mais non nul, afin de conserver une bonne vitrification entraînant une meilleure productivité. En effet, même une très faible quantité de phosphore peut améliorer substantiellement la vitrification et ainsi augmenter substantiellement la productivité, et si cette quantité de phosphore est choisie toutefois suffisamment faible, elle n'aura pas d'effet négatif sur la netteté des profils d'indice ou alors un effet négligeable. Une absence totale de phosphore peut par contre entraîner dans certains cas des problèmes de vitrification. De préférence, un bon compromis entre netteté de profil d'indice d'une part et bonne vitrification entraînant une productivité élevée d'autre part est réalisé lorsque les couches de la préforme correspondant à la gaine intérieure et à l'anneau de la fibre optique présentent un taux de phosphore en poids compris entre 0,03% et 0,1 %.

De manière avantageuse, les couches de la préforme correspondant à la gaine extérieure de la fibre optique présentent un taux de phosphore en poids appartenant à la même plage de valeurs que les couches de la préforme correspondant à la gaine intérieure et à l'anneau de la fibre optique, c'est-à-dire inférieur ou égal à 0,1 % et de préférence entre 0,03% et 0,1 %.

Avantageusement, le dépôt des couches est réalisé à une pression sensiblement égale à la pression atmosphérique à 20% près, et non pas à basse ou à très basse pression, comme par exemple un dixième ou un centième d'atmosphère, une pression partielle en dopant plus élevée permettant d'augmenter la quantité de matière disponible et donc la taille des particules de suie déposées.

Le procédé selon l'invention qui supprime ou diminue fortement le taux de phosphore contenu dans la fibre optique réalisée est particulièrement avantageux dans le cas où la fibre optique est destinée à être intégrée dans un câble sous-marin, car un taux important de phosphore augmente la sensibilité de la fibre optique aux rayons gamma émis par les fonds marins, ces rayons gamma provoquant une augmentation de l'atténuation des fibres optiques au cours du temps.

## Revendications

1. Procédé de réalisation de préforme à fibre optique par dépôt de couches,
le procédé étant de type dépôt chimique en place vapeur (CVD),
la fibre optique ayant d'une part un coeur comprenant au moins une partie centrale, une gaine intérieure et un anneau et d'autre part une gaine extérieure,
la fibre optique étant de type fibre à dispersion décalée ou à compensation de dispersion (DSF ou DCF)
**caractérisé en ce que** le procédé est de type dépôt chimique en phase vapeur utilisant un four comme moyens de chauffage (FCVD)
et **en ce que** les couches de la préforme correspondant à la gaine intérieure et à l'anneau de la fibre optique comprenant de phosphore et présentent un taux de phosphore en poids inférieur ou égal à 0,1%.

2. Procédé de réalisation de préforme à fibre optique selon la revendication 1, **caractérisé en ce que** les couches de la préforme correspondant à la gaine intérieure et à l'anneau de la fibre optique présentent un taux de phosphore en poids compris entre 0,03% et 0,1 %.

3. Procédé de réalisation de préforme à fibre optique selon l'une quelconque des revendications précédentes, **caractérisé en ce que** les couches de la préforme correspondant à la gaine extérieure de la fibre optique présentent un taux de phosphore en poids appartenant à la même plage de valeurs que les couches de la préforme correspondant à la gaine intérieure et à l'anneau de la fibre optique.

4. Procédé de réalisation de préforme à fibre optique selon l'une quelconque des revendications précédentes, **caractérisé en ce que** le dépôt des couches est réalisé à une pression sensiblement égale à la pression atmosphérique à 20% près.

5. Procédé de réalisation de préforme à fibre optique selon l'une quelconque des revendications précédentes, **caractérisé en ce que** la fibre optique est destinée à être intégrée dans un câble sous-marin.

## Patentansprüche

1. Verfahren zur Herstellung einer Vorform für optische Fasern durch Niederschlag von Schichten,
wobei das Verfahren von der Art chemischer Niederschlag in der Dampfphase ist (CVD),
wobei die optische Faser einerseits einen Kern mit wenigstens einem zentralen Teil, einem inneren Mantel und einem Ring und andererseits einen äußeren Mantel aufweist,
wobei die optische Faser von der Art Faser mit versetzer Dispersion oder mit Dispersionskompensation (DSF oder DCF) ist,
**dadurch gekennzeichnet, dass** das Verfahren von der Art chemischer Niederschlag in der Dampfphase ist, das einen Ofen als Heizmittel verwendet (FCVD)
und dass die Schichten der Vorform, die dem inneren Mantel und dem Ring der optischen Faser, die Phosphor enthält, entsprechen, einen Gewichtsanteil von Phosphor von kleiner oder gleich 0,1 % aufweisen.

2. Verfahren zur Herstellung einer Vorform für optische Fasern nach Anspruch 1, **dadurch gekennzeichnet, dass** die Schichten der Vorform, die dem inneren Mantel und dem Ring der optischen Faser entsprechen, einen Gewichtsanteil von Phosphor zwischen 0,03% und 0,1% aufweisen.

3. Verfahren zur Herstellung einer Vorform für optische Fasern nach einem der vorhergehenden Ansprüche, **dadurch gekennzeichnet, dass** die Schichten der Vorform, die dem äußeren Mantel der optischen Faser entsprechen, einen Gewichtsanteil von Phosphor aufweisen, der demselben Zahlenbereich angehört wie die Schichten der Vorform, die dem inneren Mantel und dem Ring der optischen Faser entsprechen.

4. Verfahren zur Herstellung einer Vorform für optische Fasern nach einem der vorhergehenden Ansprüche, **dadurch gekennzeichnet, dass** der Niederschlag der Schichten bei einem Druck erfolgt, der im Wesentlichen, d. h. auf 20% genau gleich dem atmosphärischen Druck ist.

5. Verfahren zur Herstellung einer Vorform für optische Fasern nach einem der vorhergehenden Ansprüche, **dadurch gekennzeichnet, dass** die optische Faser zum Einbau in ein Unterwasserkabel bestimmt ist.

## Claims

1. Method of producing an optical fibre preform by deposition of layers,
the method being of a chemical vapour deposition (CVD) type,
the optical fibre having, on the one hand, a core comprising at least one central part, an inner cladding and a ring and, on the other hand, an outer cladding,
the optical fibre being of a dispersion-shifted or dispersion-compensating fibre (DSF or DCF) type,
**characterised in that** the method is of a chemical vapour deposition type which uses a furnace as heating means (FCVD),
and **in that** the layers of the preform corresponding to the inner cladding and the ring of the optical fibre comprise phosphorus and have a level of phosphorus of less than or equal to 0.1 % by weight.

2. Method of producing an optical fibre preform, according to claim 1, **characterised in that** the layers of the preform corresponding to the inner cladding and the ring of the optical fibre have a level of phosphorus of between 0.03 % and 0.1 %, inclusive, by weight.

3. Method of producing an optical fibre preform, according to any one of the preceding claims, **characterised in that** the layers of the preform corresponding to the outer cladding of the optical fibre have a level of phosphorus belonging to the same range of values, by weight, as the layers of the preform corresponding to the inner cladding and the ring of the optical fibre.

4. Method of producing an optical fibre preform, according to any one of the preceding claims, **characterised in that** deposition of the layers is carried out at a pressure substantially equal to atmospheric pressure to within 20 %.

5. Method of producing an optical fibre preform, according to any one of the preceding claims, **characterised in that** the optical fibre is intended for integration into a submarine cable.
